(19) **Europäisches Patentamt European Patent Office Office européen des brevets**

(11) **EP 4 773 018 A1**

(12) **EUROPEAN PATENT APPLICATION**

(43) Date of publication:
08.07.2026 Bulletin 2026/28

(21) Application number: 25221193.3

(22) Date of filing: 05.12.2025

(51) International Patent Classification (IPC):
*G06F 16/3331* (2025.01) *G06F 21/62* (2013.01)

(52) Cooperative Patent Classification (CPC):
G06F 16/3331; G06F 21/6245

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.01.2025 US 202563741452 P
06.11.2025 US 202519382200

(71) Applicant: HTC Corporation
Taoyuan City 330 (TW)

(72) Inventors:
• TSENG, Te-Pei
330 Taoyuan City (TW)
• CHUNG, Yi-Fan
330 Taoyuan City (TW)

(74) Representative: Wagner & Geyer
Partnerschaft mbB
Patent- und Rechtsanwälte
Gewürzmühlstrasse 5
80538 München (DE)

(54) **METHOD AND SYSTEM FOR RETRIEVING QUERYING RESULTS, AND COMPUTER READABLE STORAGE MEDIUM**

(57) The embodiments of the disclosure provide a method and system for retrieving querying results, and a computer readable storage medium. The method includes: reading a private data; performing an irreversible transformation on the private data to generate a reference data; transmitting a first query data to a server, wherein the first query data is determined according to the reference data; querying a public database based on the first query data to retrieve a plurality of first querying results; transmitting the plurality of first querying results and first information associated with the plurality of first querying results to the client device; determining a plurality of second querying results among the plurality of first querying results based on the first information; and showing second information associated with the plurality of second querying results.

FIG. 1

**Description**

CROSS-REFERENCE TO RELATED APPLICATION

This application claims the priority benefit of U.S. provisional application serial no. 63/741,452, filed on January 3, 2025. The entirety of the above-mentioned patent application is hereby incorporated by reference herein and made a part of this specification.

BACKGROUND OF THE INVENTION

1. Field of the Invention

The disclosure generally relates to a querying mechanism, in particular, to a method and system for retrieving querying results, and a computer readable storage medium.

2. Description of Related Art

Existing patent retrieval systems primarily rely on keyword-based searching and classification filtering. Although they provide access to extensive patent databases, they still suffer from several practical limitations. For instance, users are often required to have prior knowledge of patent structure and search strategies; otherwise, important documents may be missed due to imprecise or inconsistent query terms. Moreover, most current systems depend solely on literal keyword matching without semantic understanding, making it difficult to handle synonyms, technical variations, or multilingual content, thus affecting the completeness and accuracy of retrieval results.

Furthermore, the ranking of search results is typically based on keyword hit rates or filing dates, which fails to reflect the actual semantic or technical relevance to the user's query. For users who need to review and compare a large volume of patent data, the lack of advanced filtering, semantic comparison, and integrated analysis tools in current systems leads to low retrieval efficiency and difficulty in identifying key or related patents. Therefore, there is a pressing need for an improved patent retrieval assistance system or method to overcome the above drawbacks.

SUMMARY OF THE INVENTION

Accordingly, the present disclosure is directed to a method and system for retrieving querying results, and a computer readable storage medium, which can be used to solve the above technical problem.

The embodiments of the disclosure provide a method for retrieving querying results. The method includes: reading, by a client device, a private data; performing, by the client device, an irreversible transformation on the private data to generate a reference data; transmitting, by the client device, a first query data to a server, wherein the first query data is determined according to the reference data; querying, by the server, a public database based on the first query data to retrieve a plurality of first querying results; transmitting, by the server, the plurality of first querying results and first information associated with the plurality of first querying results to the client device; determining, by the client device, a plurality of second querying results among the plurality of first querying results based on the first information; and showing, by the client device, second information associated with the plurality of second querying results.

The embodiments of the disclosure provide a system for retrieving querying results, including a client device and a server, connected with the client device. The client device is configured to read a private data. The client device is configured to perform an irreversible transformation on the private data to generate a reference data. The client device is configured to transmit a first query data, wherein the first query data is determined according to the reference data. The server is configured to receive the first query data and query a public database based on the first query data to retrieve a plurality of first querying results. The server is configured to transmit the plurality of first querying results and first information associated with the plurality of first querying results to the client device. The client device is configured to determine a plurality of second querying results among the plurality of first querying results based on the first information. The client device is configured to showing second information associated with the plurality of second querying results.

The embodiments of the disclosure provide a computer readable storage medium, the computer readable storage medium recording an executable computer program, the executable computer program being loaded by a system for retrieving querying results to perform steps of: reading, by a client device of the system, a private data; performing, by the client device of the system, an irreversible transformation on the private data to generate a reference data; transmitting, by the client device of the system, a first query data to a server, wherein the first query data is determined according to the reference data; querying, by the server of the system, a public database based on the first query data to retrieve a plurality of first querying results; transmitting, by the server of the system, the plurality of first querying results and first information associated with the plurality of first querying results to the client device; determining, by the client device of the system, a plurality of second querying results among the plurality of first querying results based on the first information; and showing, by the client device of the system, second information associated with the plurality of second querying results.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 shows a system for retrieving querying results according to an embodiment of the disclosure.

FIG. 2 shows a flow chart of the method for retrieving querying results according to an embodiment of the disclosure.

FIG. 3 shows a flow chart of querying the public database according to an embodiment of the disclosure.

FIG. 4 shows a flow chart of determining the comparison result between the first query data and each of the plurality of first candidate content data according to an embodiment of the disclosure.

FIG. 5 shows a flow chart of determining the second querying results according to an embodiment of the disclosure.

FIG. 6A to FIG. 6C show a schematic diagram of an application scenario according to an embodiment of the disclosure.

DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

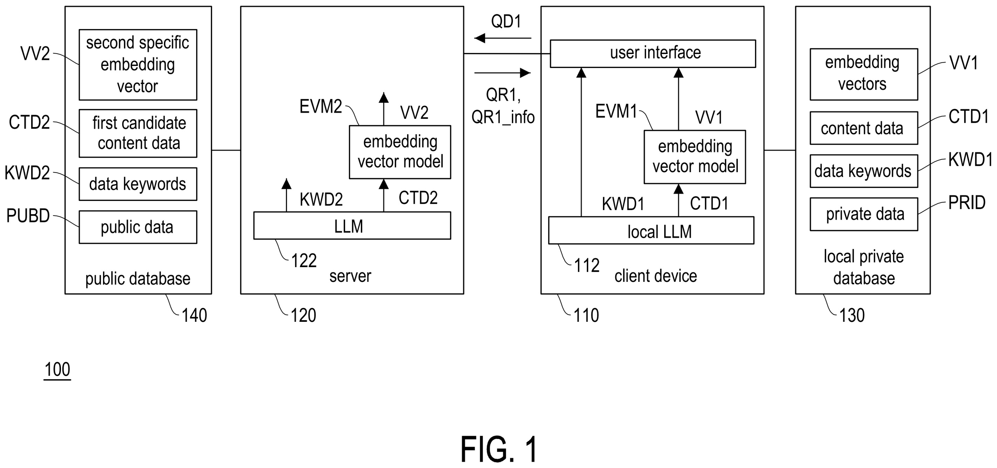

See FIG. 1, which shows a system for retrieving querying results according to an embodiment of the disclosure.

In FIG. 1, the system 100 includes a client device 110 and a server 120, which are communicatively connected via a network. The system 100 is configured to retrieve and process public documents in the public database 140, such as patent publications, academic papers, or technical disclosures.

The client device 110 may be, for example, a personal computer, a laptop, a tablet, or a smartphone operated by a user. The client device 110 may include a user interface module configured to provide a user interface for receiving a query input from the user.

The server 120 is configured to perform backend processing for the system 100. The server 120 may include a public database storing a plurality of public documents, and a search engine configured to perform, for example, keyword-based matching and/or semantic similarity analysis.

The client device 110 and the server 120 may exchange data using application programming interfaces (APIs) or web-based communication protocols, such as HTTP or HTTPS. In some embodiments, part of the processing may be distributed between the client device 110 and the server 120 to optimize performance or reduce latency.

In the embodiments of the disclosure, the client device 110 and the server 120 cooperate to implement a method for retrieving querying results proposed by the embodiments of the disclosure. Detailed discussions would be provided in the following.

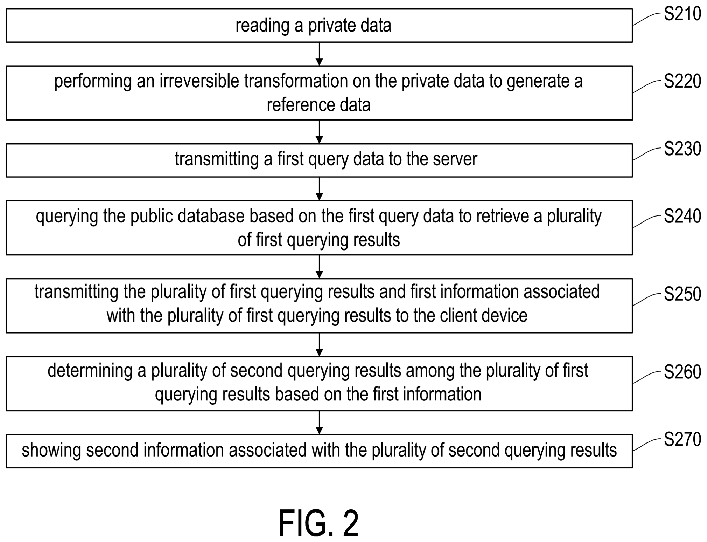

See FIG. 2, which shows a flow chart of the method for retrieving querying results according to an embodiment of the disclosure. The method of this embodiment may be executed by the system 100 in FIG. 1, and the details of each step in FIG. 2 will be described below with the components shown in FIG. 1.

In step S210, the client device 110 reads a private data PRID.

In one embodiment, the client device 110 may read the private data PRID from the local private database 130. In another embodiment, the client device 110 may read the private data PRID from the input and/or uploaded files of the user, but the disclosure is not limited thereto.

In some embodiments, the local private database 130 may be a secure data repository stored on or accessible by the client device 110. The local private database 130 may store confidential or proprietary information that is not accessible by external parties or remote servers (e.g., the server 120).

In some embodiments, the private data PRID stored in the local private database 130 may include internal research and development (R&D) documents, draft patent disclosure materials, technical white papers, internal test results, or unpublished project documentation. In the embodiment, the private data PRID may be uploaded by the user by using the user interface.

In the embodiments of the disclosure, the client device 110 may perform some preliminary operations based on the private data PRID to generate some information that facilitates the user to determine the query input, and the associated details would be introduced later.

In one embodiment, the client device 110 may access the local private database 130 to retrieve relevant private data PRID in step S210. In certain implementations, the private database 130 may be encrypted or access-controlled to ensure that sensitive information remains isolated from the public domain or external networks, but the disclosure is not limited thereto.

In step S220, the client device 110 performs an irreversible transformation on the private data PRID to generate a reference data.

In one embodiment, the irreversible transformation may include one or more processes such as feature extraction, embedding generation, or secure hashing, which convert the original private content (e.g., the private data PRID) into an abstract representation that cannot be used to reconstruct the original private content.

The reference data may retain key semantic or structural features of the private data PRID, allowing it to be used in subsequent retrieval operations or similarity comparison, without exposing the confidential content itself. In certain embodiments, the irreversible transformation may be designed to comply with privacy-preserving or data security requirements, ensuring that sensitive information remains local to the client device 110 and is never transmitted in raw form.

In FIG. 1, the irreversible transformation may include: determining a content data CTD1 and a plurality of data keywords KWD1 associated with the private data PRID; and converting the content data CTD1 into a plurality of embedding vectors VV1, wherein the reference data includes the plurality of data keywords KWD1 and the plurality of embedding vectors VV1.

In FIG. 1, the client device 110 may feed the private data PRID into a local large language model (LLM) 112, wherein the local LLM 112 generates a first abstract of the private data PRID, retrieves at least one content component of the private data PRID, and determines the plurality of data keywords KWD1 associated with the private data PRID.

In the embodiments of the disclosure, the at least one content component of the private data PRID may include at least one of paragraphs and images in the private data PRID. In this case, one content component may be understood as one paragraph in the private data PRID or one image in the private data PRID, but the disclosure is not limited thereto.

In one embodiment, the content data CTD1 associated with the private data PRID may include the first abstract and the at least one content component of the private data PRID.

In one embodiment, whenever the local LLM 112 receives a data (e.g., a document or the like), a proper prompt may be specifically designed to trigger the local LLM 112 to generate the associated abstract of the data, retrieve paragraphs and/or images in the data, and/or extracts/summarizes keywords from the data, but the disclosure is not limited thereto.

In this case, when the client device 110 feeds the private data PRID into the local LLM 112, the local LLM 112 may be triggered by the above prompt to determine the first abstract, the at least one content component, and/or the plurality of data keywords KWD1, but the disclosure is not limited thereto.

In some embodiments, the local LLM 112 may be to a local instance of a large language model deployed on or accessible by the client device 110. The local LLM 112 may be implemented using an open-source language model (e.g., LLaMA, Mistral, Falcon, or similar transformer-based models) or a proprietary language model fine-tuned for private document processing tasks. The model may be executed using a local inference engine, such as those provided by ONNX Runtime, Hugging Face Transformers, or other AI model serving frameworks. The local deployment ensures that sensitive data is processed entirely within the secure environment of the client device 110.

In the embodiments of the disclosure, the local LLM 112 may be maintained and updated exclusively by authorized personnel, such as employees or system administrators of the organization that deploys or operates the system 100. The access to the model files, parameters, and update procedures is restricted to ensure operational integrity, protect proprietary configurations, and prevent unauthorized tampering or data leakage. This design supports both data confidentiality and controlled model governance within enterprise environments, but the disclosure is not limited thereto.

In FIG. 1, converting the content data CTD1 into the plurality of embedding vectors VV1 may include: feeding the first abstract of the private data PRID into an embedding vector model EVM1 to convert the first abstract of the private data PRID into a first embedding vector; and feeding the at least one content component of the private data PRID1 into the embedding vector model EVM1 to convert each of the at least one content component of the private data PRID into a second embedding vector, wherein the plurality of embedding vectors comprise the second embedding vector corresponding to each of the at least one content component and the first embedding vector.

In the embodiments of the disclosure, the embedding vector model EVM1 may be a semantic embedding generator module configured to receive input data, such as a text abstract (e.g., the first abstract), a textual paragraph (e.g., the paragraph in the private data PRID), and/or an image (e.g., the image in the private data PRID), and convert the input data into a corresponding semantic embedding vector. The semantic embedding vector may represent the underlying meaning or content structure of the input data.

For text-based inputs (e.g., abstracts or paragraphs), the embedding vector model EVM1 may utilize pre-trained or fine-tuned transformer-based models, such as Sentence-BERT (SBERT), MiniLM, MPNet, or OpenAI's text-embedding-ada-002. These models are capable of encoding textual content into dense vector representations.

For image-based inputs, the embedding vector model EVM1 may utilize vision models such as CLIP (Contrastive Language-Image Pretraining), OpenCLIP, or BLIP, which are capable of mapping images into a joint multimodal embedding space. In some implementations, these models may also support encoding both image and associated caption text into comparable embeddings.

In FIG. 1, the content data CTD1, the plurality of data keywords KWD1, and/or the plurality of embedding vectors VV1 may be stored along with the private data PRID in the local private database 130, but the disclosure is not limited thereto.

In the embodiments of the disclosure, for each public data PUBD, the server 120 may determine the associated data keywords KWD2, first candidate content data CTD2, and second specific embedding vectors VV2 by the procedure similar to the client device 110 determining the data keywords KWD1, the content data CTD1, and the embedding vectors VV1.

For example, the server 120 may feed the public data (e.g., a patent publication) into the LLM 122, and the LLM 122 may accordingly determine the associated data keywords KWD2 and the first candidate content data CTD2 (e.g., the abstract and content component (e.g., textual paragraphs and/or images)) of the public data PUBD.

In addition, the server 120 may feed the first candidate content data CTD2 into the embedding vector model EVM2 to output the second specific embedding vectors VV2, wherein the embedding vector model EVM2 may be the same as the embedding vector model EVM1, such that the consistency between the semantic embedding mapping process can be maintained.

In FIG. 1, the first candidate content data CTD2, the plurality of data keywords KWD2, and/or the plurality of second specific embedding vectors VV2 may be stored along with the public data PUBD in the public database 140, but the disclosure is not limited thereto.

In step S230, the client device 110 transmits a first query data QD1 to the server 120, wherein the first query data QD1 is determined according to the reference data.

In the embodiments of the disclosure, the user interface (e.g., a web interface) provided by the client device 110 may display a plurality of content types and the plurality of data keywords KWD1 associated with the private data PRID.

In one embodiment, the plurality of content types may include a first content type of abstract, a second content type of textual paragraph, and/or a third content type of image, and the user may select the required one or more content type therefrom during performing the query input, but the disclosure is not limited thereto.

In this case, the client device 110 may determine the first query data QD1 based on the query input performed on the user interface. In the embodiment, the first query data QD1 may indicate at least one of a first keyword combination and at least one of first specific embedding vector among the plurality of embedding vectors VV1, wherein the at least one of first specific embedding vector corresponds to at least one specific content type indicated by the query input among the plurality of content types.

In one embodiment, the at least one specific content type indicated by the query input may be regarded as the selected one or more content type by the user during performing the query input, but the disclosure is not limited thereto.

In some embodiment, if the user does not select any content type during performing the query input, the at least one specific content type indicated by the query input may include one or more default content type among the content types.

In one embodiment, if the first content type of abstract is selected by the user, the client device 110 may determine the second embedding vector corresponding to the first abstract of in the private data PRID as a part of the at least one of first specific embedding vector.

In one embodiment, if the second content type of textual paragraph is selected by the user, the client device 110 may determine the second embedding vector corresponding to the paragraphs in the private data PRID as a part of the at least one of first specific embedding vector.

In one embodiment, if the third content type of image is selected by the user, the client device 110 may determine the second embedding vector corresponding to the images in the private data PRID as a part of the at least one of first specific embedding vector, but the disclosure is not limited thereto.

In the embodiment where the user interface displays the plurality of data keywords KWD1, the user may select one or more required keywords form the plurality of data keywords KWD1, and the client device 110 may determine the first keyword combination based on the selected one or more required keywords.

In some embodiments, the user interface may also show some synonyms and/or extension words associated with the plurality of data keywords KWD1 for the user to select as a part of the first keyword combination.

From another perspective, the first keyword combination includes at least one specific keyword indicated by the query input among the plurality of data keywords KWD1, but the disclosure is not limited thereto.

In one embodiment, an order of the at least one specific keyword is randomized in the first keyword combination.

In this case, the confidentiality can be improved.

In one embodiment, each of the plurality of data keywords KWD1 in the user interface may be labelled with a corresponding total occurrence count across multiple documents in at least one of the local private database 130 and the public database 140.

In the embodiment, the total occurrence count indicates how many times the respective data keyword appears across the multiple documents.

For example, the client device 110 and/or the server 120 may scan each document in the selected database(s), count the number of times each keyword appears, and aggregate these counts to obtain a cumulative frequency. The resulting total occurrence count may then be displayed adjacent to the corresponding data keyword in the user interface for the user's reference.

This feature enables users to quickly identify commonly occurring or semantically significant keywords within the context of the available document corpus, thereby improving search guidance, query formulation, and relevance judgment.

Specifically, the user may be aware of the generality of each of the plurality of data keywords KWD1 based on the corresponding total occurrence count. For example, for the data keywords KWD1 corresponding to high total occurrence count, the user may know that these data keywords KWD1 may be too general to be used for searching. On the other hand, for the data keywords KWD1 corresponding to low total occurrence count, the user may know that these data keywords KWD1 may be suitable to be used for searching more specifically.

In one embodiment, the client device 110 may further determine a second query data based on the query input performed on the user interface, wherein the second query data indicates at least one of a second keyword combination and the at least one of first specific embedding vector, and the second query data is used to query the local private database 130. In the embodiment, the second keyword combination comprise the at least one specific keyword presented in order.

In step S240, the server 120 queries the public database 140 based on the first query data QD1 to retrieve a plurality of first querying results QR1.

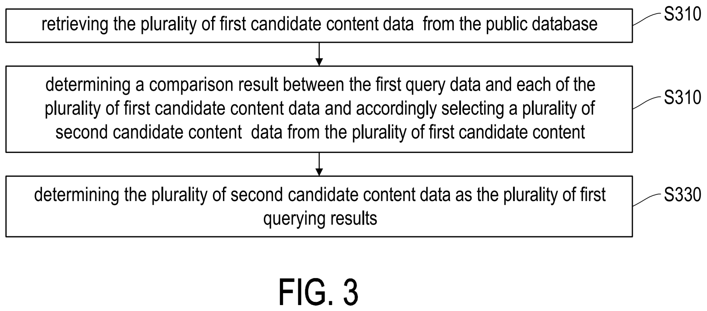

In one embodiment, step S240 may be carried out by using the flow in FIG. 3, wherein FIG. 3 shows a flow chart of querying the public database according to an embodiment of the disclosure.

In step S310, the server 120 retrieves the plurality of first candidate content data CTD2 from the public database 140, wherein the plurality of first candidate content data CTD2 correspond to a plurality of public documents in the public database 140.

In the embodiment, one public document may be understood as corresponding to one public data mentioned in the above, and the associated first candidate content data CTD2 (e.g., paragraphs, images, abstracts) may be stored in the public database 140 as discussed in the above.

In step S320, the server 120 determines a comparison result between the first query data QD1 and each of the plurality of first candidate content data CTD2 and accordingly select a plurality of second candidate content data from the plurality of first candidate content CTD2.

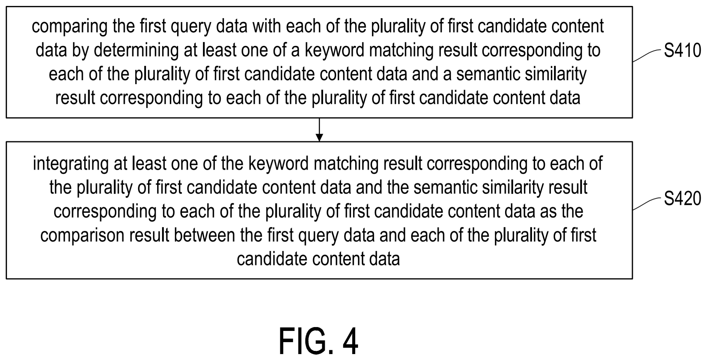

In the embodiments of the disclosure, step S320 may be carried out by using the flow in FIG. 4, wherein FIG. 4 shows a flow chart of determining the comparison result between the first query data and each of the plurality of first candidate content data according to an embodiment of the disclosure.

In step S410, the server 120 compares the first query data QD1 with each of the plurality of first candidate content data CTD2 by determining at least one of a keyword matching result corresponding to each of the plurality of first candidate content data CTD2 and a semantic similarity result corresponding to each of the plurality of first candidate content data CTD2.

In one embodiment, the server 120 may determine a first comparison result between the first keyword combination and each of the plurality of first candidate content data CTD2 as the keyword matching result corresponding to each of the plurality of first candidate content data CTD2.

In the embodiment, each first candidate content data CTD2 may correspond to a text segment, such as a paragraph, extracted from the corresponding public document, for example, a published patent application or other publicly available technical disclosure. The server 120 may compare the first keyword combination indicated in the first query data QD1 with the textual content of each first candidate content data CTD2 to assess the degree of relevance or textual similarity.

The comparison (e.g., the keyword matching) may be performed using a keyword-based scoring algorithm such as BM25, TF-IDF, or another term-frequency-based relevance metric. The resulting score, computed for each first candidate content data CTD2, may serve as the first comparison result, indicating the degree of keyword-level similarity between the first keyword combination and each first candidate content data CTD2.

Accordingly, the first comparison result of each first candidate content data CTD2 is treated as its corresponding keyword matching result, and may be further used as a component in a hybrid scoring mechanism combining multiple types of relevance evaluation (e.g., semantic similarity).

In addition, the server 120 may retrieve at least one second specific embedding vector VV2 of each of the plurality of first candidate content data CTD2, wherein the at least one second specific embedding vector VV2 respectively corresponds to the at least one of first specific embedding vector indicated in the first query data QD1.

In the embodiment, the at least one second specific embedding vector VV2 and the at least one first specific embedding vector indicated in the first query data QD1 may corresponds to the same specific content type indicated by the query input among the plurality of content types.

For example, if the first query data QD1 indicates that the first specific embedding vector corresponds to the first content type, the server 120 may retrieve the second specific embedding vector VV2 corresponding to the first content type to be further used for being comparing with the first specific embedding vector.

For example, if the first query data QD1 indicates that the first specific embedding vector corresponds to the second content type, the server 120 may retrieve the second specific embedding vector VV2 corresponding to the second content type to be further used for being comparing with the first specific embedding vector.

For example, if the first query data QD1 indicates that the first specific embedding vector corresponds to the third content type, the server 120 may retrieve the second specific embedding vector VV2 corresponding to the third content type to be further used for being comparing with the first specific embedding vector.

For example, if the first query data QD1 indicates that some of the first specific embedding vector corresponds to one the content types and some of the first specific embedding vector corresponds to others of the content types, the server 120 may retrieve the second specific embedding vector VV2 corresponding to the indicated content types to be further used for being comparing with the first specific embedding vector, but the disclosure is not limited thereto.

From another perspective, the first specific embedding vector may be regarded as being generated based on input query data of a particular content type, such as a textual paragraph, an image, or an abstract. Correspondingly, each second specific embedding vector VV2 may be regarded as being precomputed or dynamically generated from a respective first candidate content data CTD2 of the same content type. For instance, if the first query data QD1 indicates that one first specific embedding vector corresponds to the content type of textual paragraph, this first specific embedding vector may be compared to a second specific embedding vector derived from a textual paragraph (e.g., one of the first candidate content data CTD2) contained in a public document.

In one embodiment, the server 120 may determines a second comparison result between the at least one of first specific embedding vector and the corresponding at least one second specific embedding vector VV2 of each of the plurality of first candidate content data CTD2 as the semantic similarity result corresponding to each of the plurality of first candidate content data.

The server 120 may compute the semantic similarity between the embedding vectors using a vector comparison metric such as cosine similarity, dot product, or Euclidean distance. The resulting similarity score represents the second comparison result, which serves as the semantic similarity result associated with the corresponding first candidate content data CTD2.

In step S420, the server 120 integrates at least one of the keyword matching result corresponding to each of the plurality of first candidate content data CTD2 and the semantic similarity result corresponding to each of the plurality of first candidate content data CTD2 as the comparison result between the first query data QD1 and each of the plurality of first candidate content data CTD2.

As mentioned in the above, for each first candidate content data CTD2, the keyword matching result may be a score computed using a keyword-based retrieval method such as BM25, while the semantic similarity result may be a score derived from a vector-based comparison (e.g., cosine similarity) between a first specific embedding vector in the first query data QD1 and a second specific embedding vector VV2 of the considered first candidate content data CTD2.

Prior to integration, the server 120 may apply standardization and/or normalization to each type of score to align their numerical ranges or distributions. Standardization techniques may include Z-score standardization, which rescales scores based on their mean and standard deviation, or robust scaling, which uses median and interquartile range to mitigate the effect of outliers.

After preprocessing, the standardized or normalized keyword matching result and semantic similarity result may be combined using a weighted summation or other integration function, where the weights can be predefined, user-configurable, or dynamically adjusted based on context or application requirements. The resulting integrated value (referred to as a first score) may used as the comparison result for the corresponding first candidate content data CTD2, which may subsequently be used for ranking, filtering, or relevance evaluation within the retrieval process.

Referring back to FIG. 3, after determining the comparison result between the first query data QD1 and each of the plurality of first candidate content data CTD2 (e.g., the first score of each of the plurality of first candidate content data), the server 120 may accordingly select the plurality of second candidate content data from the plurality of first candidate content CTD2.

In one embodiment, the server 120 may sort the plurality of first candidate content data CTD2 based on the first score of each of the plurality of first candidate content data CTD2, and determine top-K of the sorted plurality of first candidate content data CTD2 as the plurality of second candidate content data, wherein K is a positive integer.

In the embodiment, after sorting the first candidate content data CTD2 instances in descending order of their first scores, the server 120 may identify a subset comprising the top-K ranked first candidate content data CTD2 as the plurality of second candidate content data, where K (e.g., 1000) may indicate the number of highest-ranking results to retain.

For example, if the first query data QD1 includes a first specific embedding vector corresponding to the content type of textual paragraph, the server 120 may select K textual paragraphs of the first candidate content data CTD2 having highest first scores (which are characterized by the associated semantic similarities) as the plurality of second candidate content data.

For example, if the first query data QD1 includes a first specific embedding vector corresponding to the content type of abstract, the server 120 may select K abstracts of the first candidate content data CTD2 having highest first scores (which are characterized by the associated semantic similarities) as the plurality of second candidate content data.

For example, if the first query data QD1 includes the first keyword combination and a first specific embedding vector corresponding to the content type of textual paragraph, the server 120 may select K textual paragraphs of the first candidate content data CTD2 having highest first scores (which are characterized by the associated keyword matching result and semantic similarities) as the plurality of second candidate content data.

For example, if the first query data QD1 includes the first keyword combination, the server 120 may select K textual paragraphs of the first candidate content data CTD2 having highest first scores (which are characterized by the associated keyword matching result) as the plurality of second candidate content data.

In step S330, the server 120 determines the plurality of second candidate content data as the plurality of first querying results QR1.

Referring back to FIG. 2, in step S250, the step S250, the server 120 transmits the plurality of first querying results QR1 and first information QR1_info associated with the plurality of first querying results QR1 to the client device 110.

In the embodiment, the first information QR1_info associated with the plurality of first querying results QR1 may include the first score and a first rank corresponding to each of the plurality of first querying results QR1.

In the embodiment, the first rank corresponding to each of the plurality of first querying results QR1 may be the rank of each of the plurality of first querying results QR1 amongst the top-K ranked first candidate content data CTD2, but the disclosure is not limited thereto.

In step S260, the client device 110 determines a plurality of second querying results among the plurality of first querying results QR1 based on the first information QR1_info.

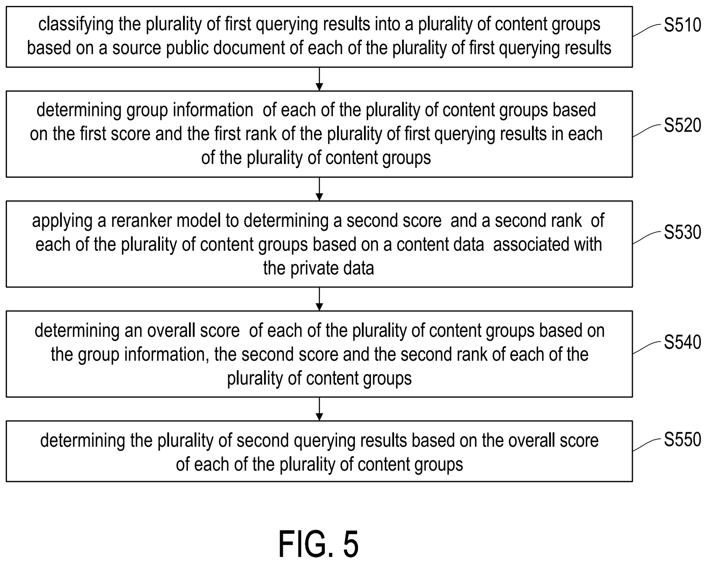

In one embodiment, step S260 may be carried out by using the flow in FIG. 5, wherein FIG. 5 shows a flow chart of determining the second querying results according to an embodiment of the disclosure.

In step S510, the client device 110 classifies the plurality of first querying results QR1 into a plurality of content groups based on a source public document of each of the plurality of first querying results QR1.

In the embodiment, each first querying result QR1 may be grouped based on its corresponding source public document. For example, if multiple querying results QR1 are extracted from the same public document (e.g., a published patent, academic article, or technical disclosure), those first querying result QR1may be assigned to the same content group.

In this case, one content group contains the first querying result QR1 from the same source public document. That is, one content group may be regarded as corresponding to one public document.

In step S520, the client device 110 determines group information of each of the plurality of content groups based on the first score and the first rank of the plurality of first querying results QR1 in each of the plurality of content groups.

In one embodiment, the client device 110 determines a first reference score of each of the plurality of content groups based on the first score of the plurality of first querying results QR1 in each of the plurality of content groups.

In one embodiment, the first reference score of each of the plurality of content groups may include a highest first score among the first score of the plurality of first querying results QR1 in each of the plurality of content groups.

For example, if a considered content group includes three querying results, and the highest first score among the three querying results in this considered content group is a value of a (e.g., a floating point number), the first reference score of this considered content group may be determined to be a, but the disclosure is not limited thereto.

In other embodiment, the first reference score of each of the plurality of content groups may include a statistical score among the first score of the plurality of first querying results QR1 in each of the plurality of content groups, such as the average score, but the disclosure is not limited thereto.

In addition, the client device 110 determines a first reference rank of each of the plurality of content groups based on the first rank of the plurality of first querying results in each of the plurality of content groups.

In one embodiment, the first reference rank of each of the plurality of content groups include a highest first rank among the first rank of the plurality of first querying results QR1 in each of the plurality of content groups.

For example, if a considered content group includes three querying results, and the highest first rank among the three querying results in this considered content group is a value of b (e.g., an integer), the first reference rank of this considered content group may be determined to be b, but the disclosure is not limited thereto.

In other embodiment, the first reference score of each of the plurality of content groups may include a statistical rank among the first score of the plurality of first querying results QR1 in each of the plurality of content groups, such as the average rank, but the disclosure is not limited thereto.

Afterwards, the client device 110 determines the first reference score and the first reference rank of each of the plurality of content groups as the group information of each of the plurality of content groups.

For better understanding, search _score[i] may be used to characterize the first reference score of the i-th content group, search _rank[i] may be used to characterize the first reference rank of the i-th content group, wherein i is an index, $1 \le i \le M$, and M is a number of the plurality of content groups, but the disclosure is not limited thereto.

In step S530, the client device 110 applies a reranker model to determining a second score and a second rank of each of the plurality of content groups based on a content data associated with the private data PRID.

In the embodiment, the content data associated with the private data PRID in step S530 may be, for example, the first abstract in the content data CTD1 of the private data PRID, but the disclosure is not limited thereto.

In the embodiment, the client device 110 may input the first abstract and each of the plurality of content groups into the reranker model to determine the second score of each of the plurality of content groups and the second rank of each of the plurality of content groups.

In one embodiment, the reranker model may be configured to assess the semantic relevance between the first abstract and the first querying results QR1 within each content group. For example, the first abstract may serve as the query input, and each first querying result QR1 in a given content group may be evaluated based on its semantic similarity to the first abstract. The reranker model may assign a relevance score to each first querying result QR1, and then aggregate or summarize the scores for the content group as a whole to compute the second score (which may be a floating number) of the corresponding content group.

Based on the computed second scores, the client device 110 may further determine a second rank (which may be an integer) for each content group, indicating the relative relevance or importance of each content group in the context of the first abstract.

For better understanding, reranker_score[i] may be used to characterize the second score of the i-th content group, reranker_rank[i] may be used to characterize the second rank of the i-th content group, but the disclosure is not limited thereto.

In step S540, the client device 110 may determine an overall score of each of the plurality of content groups based on the group information, the second score and the second rank of each of the plurality of content groups.

In one embodiment, the overall score of an i-th content group among the plurality of content groups is characterized by:

$$\text{overall\_score}[i] = \text{search\_score}[i]/(1 + \text{search\_rank}[i]) + (\text{reranker\_score}[i]/(1 + \text{reranker\_rank}[i])).$$

In one embodiment, search _score[i] and reranker_score[i] may be standardized and/or normalized by using the means discussed in the above embodiments prior to the determination of overall _score[i], but the disclosure is not limited thereto.

In step S550, the client device 110 may determine the plurality of second querying results based on the overall score of each of the plurality of content groups.

In one embodiment, the client device 110 may sort the plurality of content groups based on the overall score of each of the plurality of content groups and determine top-N of the sorted plurality of content groups and retrieve a plurality of specific source public documents corresponding to the top-N of the sorted plurality of content groups.

Next, the client device 110 may determine the plurality of specific source public documents as the plurality of second querying results.

That is, the client device 110 may sort the plurality of content groups based on the associated overall score of each content group, and select a top-N subset of the sorted content groups.

Since each content group may be regarded as being linked to a specific source public document, after identifying the top-N content groups, the client device 110 may retrieve the corresponding plurality of specific source public documents associated with those top-N content groups.

In some embodiments, the specific source public documents may include published patent from patent databases (e.g., Google patent), academic article from academic databases (e.g., Google scholar), or technical disclosure from the associated databases (e.g., databases of particular companies such as Texas Instrument), and the client device 110 and/or server 120 may retrieve the specific source public documents from the corresponding databases. Alternatively or additionally, the specific source public documents may be stored in the public database PUBD for the retrieval of the client device 110 and/or the server 120.

Subsequently, the client device 110 may determine the retrieved source public documents as the plurality of second querying results, representing a final set of high-relevance documents selected for presentation, further analysis, or user interaction based on the initial query input and hierarchical evaluation processes.

Referring back to FIG. 2, in step S270, the client device 110 shows second information associated with the plurality of second querying results.

In some embodiments, the second information may include one or more first querying results QR1 that were previously grouped into a content group corresponding to the respective public document. For example, the second information may comprise textual paragraphs, images, abstracts, or other extracted content segments that contributed to the document being selected as a second querying result.

In addition to these content elements, the second information may further include metadata associated with the public document, such as, document title, publication number, filing date, applicant/assignee, IPC classification, and Summary of matched keywords or similarity scores, but the disclosure is not limited thereto.

In the embodiment, the client device 110 may show the second information by using the user interface, but the disclosure is not limited thereto.

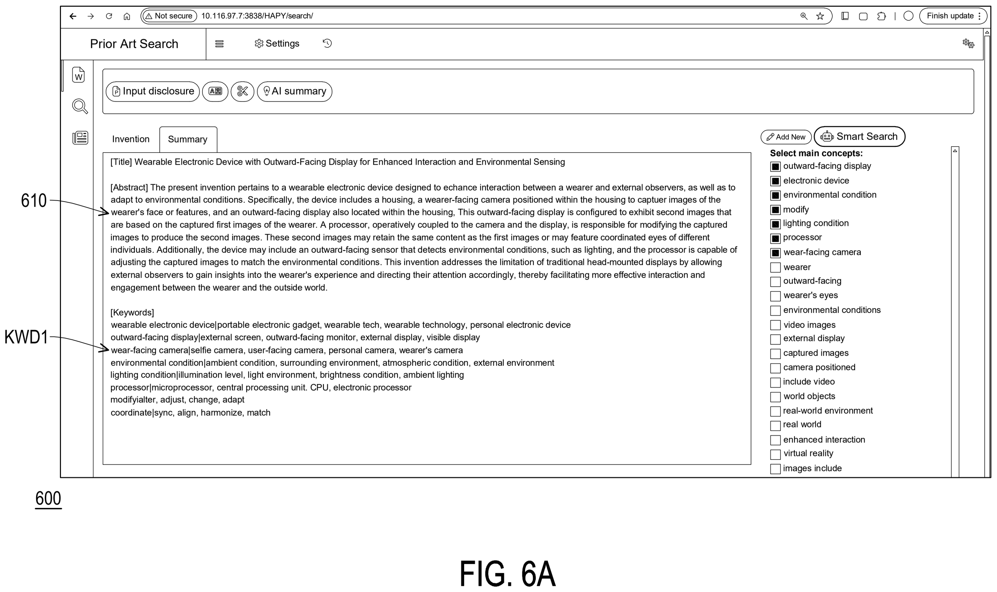

See FIG. 6A to FIG. 6C, which show a schematic diagram of an application scenario according to an embodiment of the disclosure.

In the scenario of FIG. 6A, the user may upload the considered private data PRID by using the user interface 600 displayed in the client device 110, and the client device 110 may accordingly determine the associated first abstract 610 and the data keywords KWD1.

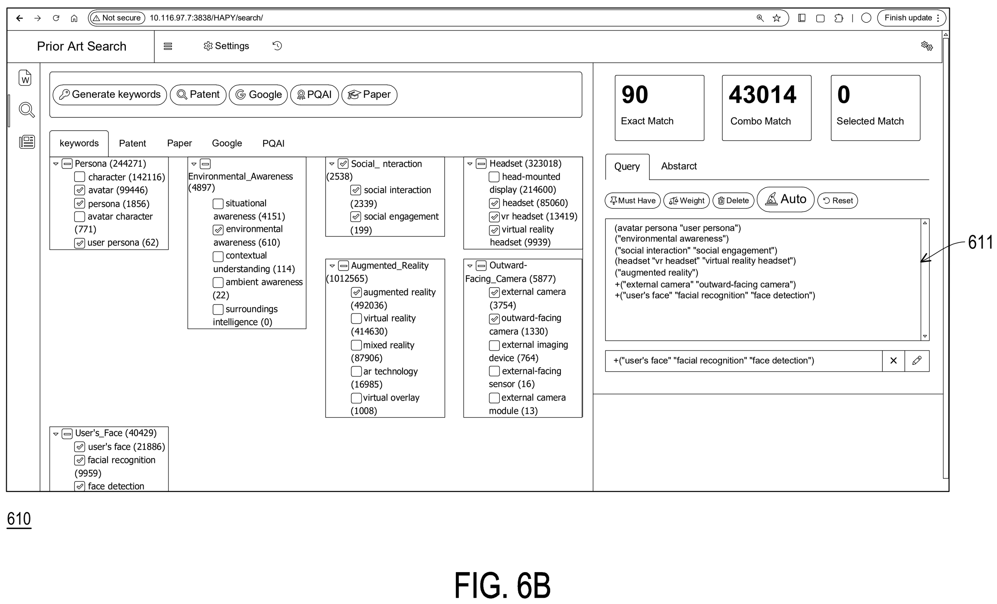

In the scenario of FIG. 6B, the user interface 610 may show the data keywords KWD1 and the synonyms, extension words associated with the plurality of data keywords KWD1, and each of the data keywords KWD 1, the synonyms, and the extension words may be labelled by the corresponding total occurrence count for the user's reference.

In addition, the user may select the required keywords by checking the checkbox near each data keywords, and the selected keywords may be shown in the field 611, wherein the selected keywords in the field 611 may be used to generate the first keyword combination, but the disclosure is not limited thereto.

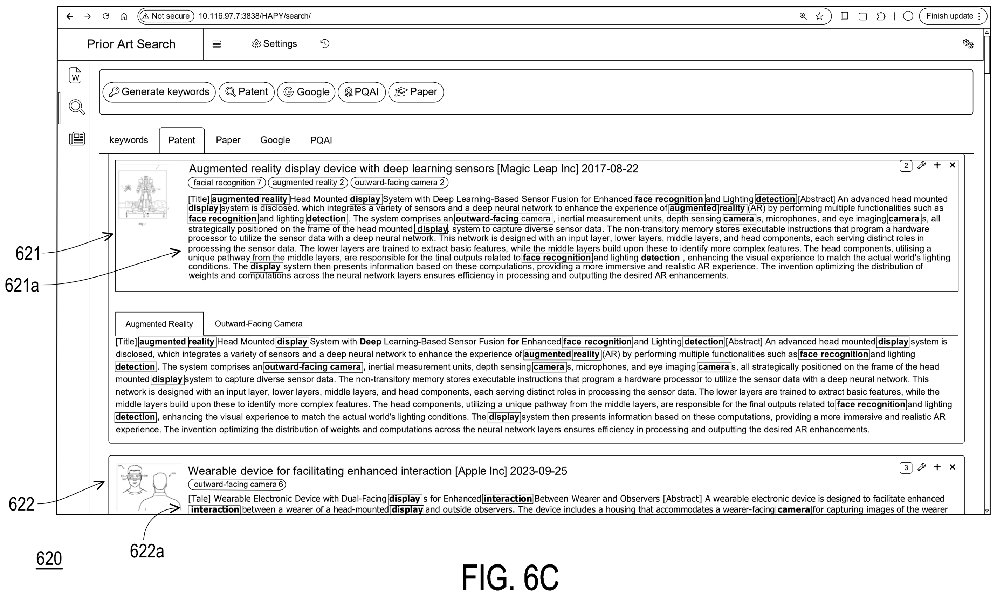

In the scenario of FIG. 6C, the user interface 620 may show the second information associated with a part of the plurality of second querying results (e.g., the second querying results 621 and 622).

In the embodiment, the second information of the second querying result 621 may include, for example, the associated first querying result 621a classified in the content group corresponding to the second querying result 621. As shown in FIG. 6C, the matched keywords in the first querying result 621a may be highlighted for characterizing the relevance between the first keyword combination and the first querying result 621a.

In the embodiment, the second information of the second querying result 622 may include, for example, the associated first querying result 622a classified in the content group corresponding to the second querying result 622. As shown in FIG. 6C, the matched keywords in the first querying result 622a may be highlighted for characterizing the relevance between the first keyword combination and the first querying result 622a.

The disclosure further provides a computer readable storage medium for executing the method for retrieving querying results. The computer readable storage medium is composed of a plurality of program instructions (for example, a setting program instruction and a deployment program instruction) embodied therein. These program instructions can be loaded into the system 100 and executed by the same to execute the method for retrieving querying results and the functions of the system 100 described above.

In summary, the embodiments of the disclosure provide a master-slave architecture (or a server-client architecture) implemented to enable a retrieval system that ensures data confidentiality while maintaining retrieval performance.

In this architecture, public data such as published patents or academic documents may be stored in public databases, whereas confidential private data, including invention disclosure records, R&D documents, or technical specifications, are retained entirely within the local private database accessible to the client device.

The client device is further equipped with the local LLM, an embedding vector model, and a reranker model, which collectively perform semantic parsing, keyword extraction, and result re-ranking. Upon receiving a private data that may contain confidential content, the client device processes the input locally to extract abstracted semantic features or keywords, which are then used to retrieve relevant entries from both local private database and public database.

To avoid any leakage of sensitive information, only anonymized keyword combination and/or semantic embeddings are transmitted to the server for public data retrieval and ranking. The server performs the necessary computations and returns only first querying results and the associated first information to the client device.

Based on the first querying results and the associated first information, the client device compiles and presents the second information associated with the second querying results to the user.

This architecture effectively preserves internal data privacy, supports scalable retrieval through offloaded public data processing, and avoids the need for client device to maintain or update large AI models or public datasets locally, thereby improving system efficiency, flexibility, and security.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

**Claims**

1. A method for retrieving querying results, comprising:

reading, by a client device, a private data;
performing, by the client device, an irreversible transformation on the private data to generate a reference data;
transmitting, by the client device, a first query data to a server, wherein the first query data is determined according to the reference data;
querying, by the server, a public database based on the first query data to retrieve a plurality of first querying results;
transmitting, by the server, the plurality of first querying results and first information associated with the plurality of first querying results to the client device;
determining, by the client device, a plurality of second querying results among the plurality of first querying results based on the first information; and
showing, by the client device, second information associated with the plurality of second querying results.

2. The method according to claim 1, wherein performing the irreversible transformation on the private data to generate the reference data comprises:

determining a content data and a plurality of data keywords associated with the private data;
converting the content data into a plurality of embedding vectors, wherein the reference data comprises the plurality of data keywords and the plurality of embedding vectors.

3. The method according to claim 2, wherein determining the content data and the plurality of data keywords associated with the private data comprises:
feeding the private data into a local large language model, wherein the local large language model generates a first abstract of the private data, retrieves at least one content component of the private data, and determines the plurality of data keywords associated with the private data, wherein the at least one content component of the private data comprises at least one of paragraphs and images in the private data, and the content data associated with the private data comprises the first abstract and the at least one content component of the private data.

4. The method according to claim 3, wherein converting the content data into the plurality of embedding vectors comprises:

feeding the first abstract of the private data into an embedding vector model to convert the first abstract of the private data into a first embedding vector;
feeding the at least one content component of the private data into the embedding vector model to convert each of the at least one content component of the private data into a second embedding vector, wherein the plurality of embedding vectors comprise the second embedding vector corresponding to each of the at least one content component and the first embedding vector.

5. The method according to claim 1, wherein the reference data comprises a plurality of data keywords associated with the private data and a plurality of embedding vectors, and the method further comprises:

providing, by the client device, a user interface displaying a plurality of content types and the plurality of data keywords associated with the private data;
determining, by the client device, the first query data based on a query input performed on the user interface, wherein the first query data indicates at least one of a first keyword combination and at least one of first specific embedding vector among the plurality of embedding vectors, wherein the at least one of first specific embedding vector corresponds to at least one specific content type indicated by the query input among the plurality of content types.

6. The method according to claim 5, wherein each of the plurality of data keywords in the user interface is labelled with a corresponding total occurrence count across multiple documents in at least one of the local private database and the public database;
wherein the first keyword combination comprise at least one specific keyword indicated by the query input among the plurality of data keywords, and an order of the at least one specific keyword is randomized in the first keyword combination.

**7.** The method according to claim 6, further comprising:

determining, by the client device, a second query data based on the query input performed on the user interface, wherein the second query data indicates at least one of a second keyword combination and the at least one of first specific embedding vector, and the second query data is used to query the local private database; wherein the second keyword combination comprise the at least one specific keyword presented in order.

**8.** The method according to claim 1, wherein querying the public database based on the first query data to retrieve the plurality of first querying results comprises:

retrieving a plurality of first candidate content data from the public database, wherein the plurality of first candidate content data correspond to a plurality of public documents in the public database; and determining a comparison result between the first query data and each of the plurality of first candidate content data and accordingly selecting a plurality of second candidate content data from the plurality of first candidate content; and determining the plurality of second candidate content data as the plurality of first querying results.

**9.** The method according to claim 8, wherein determining the comparison result between the first query data and each of the plurality of first candidate content data comprises:

comparing the first query data with each of the plurality of first candidate content data by determining at least one of a keyword matching result corresponding to each of the plurality of first candidate content data and a semantic similarity result corresponding to each of the plurality of first candidate content data; and integrating at least one of the keyword matching result corresponding to each of the plurality of first candidate content data and the semantic similarity result corresponding to each of the plurality of first candidate content data as the comparison result between the first query data and each of the plurality of first candidate content data.

**10.** The method according to claim 9, wherein the first query data indicates at least one of a first keyword combination and at least one of first specific embedding vector, and determining at least one of the keyword matching result and the semantic similarity result corresponding to each of the plurality of first candidate content data comprises:

determining a first comparison result between the first keyword combination and each of the plurality of first candidate content data as the keyword matching result corresponding to each of the plurality of first candidate content data; retrieving at least one second specific embedding vector of each of the plurality of first candidate content data, wherein the at least one second specific embedding vector respectively corresponds to the at least one of first specific embedding vector; and determining a second comparison result between the at least one of first specific embedding vector and the corresponding at least one second specific embedding vector of each of the plurality of first candidate content data as the semantic similarity result corresponding to each of the plurality of first candidate content data.

**11.** The method according to claim 8, wherein the comparison result between the first query data and each of the plurality of first candidate content data is **characterized by** a first score of each of the plurality of first candidate content data, and selecting the plurality of second candidate content data from the plurality of first candidate content comprises:

sorting the plurality of first candidate content data based on the first score of each of the plurality of first candidate content data; and determining top-K of the sorted plurality of first candidate content data as the plurality of second candidate content data, wherein K is a positive integer.

**12.** The method according to claim 1, wherein the first information associated with the plurality of first querying results comprises a first score and a first rank corresponding to each of the plurality of first querying results, and determining the plurality of second querying results among the plurality of first querying results based on the first information comprises:

classifying the plurality of first querying results into a plurality of content groups based on a source public document of each of the plurality of first querying results; determining group information of each of the plurality of content groups based on the first score and the first rank of the plurality of first querying results in each of the plurality of content groups;

applying a reranker model to determining a second score and a second rank of each of the plurality of content groups based on a content data associated with the private data;

determining an overall score of each of the plurality of content groups based on the group information, the second score and the second rank of each of the plurality of content groups; and

determining the plurality of second querying results based on the overall score of each of the plurality of content groups.

**13.** The method according to claim 12, wherein determining the plurality of second querying results based on the overall score of each of the plurality of content groups comprises:

sorting the plurality of content groups based on the overall score of each of the plurality of content groups;

determining top-N of the sorted plurality of content groups and retrieve a plurality of specific source public documents corresponding to the top-N of the sorted plurality of content groups; and

determining the plurality of specific source public documents as the plurality of second querying results.

**14.** A system for retrieving querying results, comprising:

a client device; and

a server, connected with the client device, wherein:

the client device is configured to read a private data;

the client device is configured to perform an irreversible transformation on the private data to generate a reference data;

the client device is configured to transmit a first query data, wherein the first query data is determined according to the reference data;

the server is configured to receive the first query data and query a public database based on the first query data to retrieve a plurality of first querying results;

the server is configured to transmit the plurality of first querying results and first information associated with the plurality of first querying results to the client device;

the client device is configured to determine a plurality of second querying results among the plurality of first querying results based on the first information; and

the client device is configured to showing second information associated with the plurality of second querying results.

**15.** A non-transitory computer readable storage medium, the computer readable storage medium recording an executable computer program, the executable computer program being loaded by a system for retrieving querying results to perform steps of:

reading, by a client device of the system, a private data;

performing, by the client device of the system, an irreversible transformation on the private data to generate a reference data;

transmitting, by the client device of the system, a first query data to a server, wherein the first query data is determined according to the reference data;

querying, by the server of the system, a public database based on the first query data to retrieve a plurality of first querying results;

transmitting, by the server of the system, the plurality of first querying results and first information associated with the plurality of first querying results to the client device;

determining, by the client device of the system, a plurality of second querying results among the plurality of first querying results based on the first information; and

showing, by the client device of the system, second information associated with the plurality of second querying results.

FIG. 1

EP 4 773 018 A1

```
┌─────────────────────────────────────────────────────────────────┐
│                     reading a private data                        │──S210
└─────────────────────────────────────────────────────────────────┘
                                  │
                                  ▼
┌─────────────────────────────────────────────────────────────────┐
│  performing an irreversible transformation on the private data to │──S220
│                   generate a reference data                       │
└─────────────────────────────────────────────────────────────────┘
                                  │
                                  ▼
┌─────────────────────────────────────────────────────────────────┐
│              transmitting a first query data to the server        │──S230
└─────────────────────────────────────────────────────────────────┘
                                  │
                                  ▼
┌─────────────────────────────────────────────────────────────────┐
│  querying the public database based on the first query data to    │──S240
│          retrieve a plurality of first querying results           │
└─────────────────────────────────────────────────────────────────┘
                                  │
                                  ▼
┌─────────────────────────────────────────────────────────────────┐
│  transmitting the plurality of first querying results and first   │──S250
│  information associated with the plurality of first querying       │
│            results to the client device                           │
└─────────────────────────────────────────────────────────────────┘
                                  │
                                  ▼
┌─────────────────────────────────────────────────────────────────┐
│  determining a plurality of second querying results among the     │──S260
│  plurality of first querying results based on the first           │
│                      information                                   │
└─────────────────────────────────────────────────────────────────┘
                                  │
                                  ▼
┌─────────────────────────────────────────────────────────────────┐
│  showing second information associated with the plurality of      │──S270
│                 second querying results                           │
└─────────────────────────────────────────────────────────────────┘
```

FIG. 2

| retrieving the plurality of first candidate content data from the public database | S310 |

↓

| determining a comparison result between the first query data and each of the plurality of first candidate content data and accordingly selecting a plurality of second candidate content data from the plurality of first candidate content | S310 |

↓

| determining the plurality of second candidate content data as the plurality of first querying results | S330 |

## FIG. 3

comparing the first query data with each of the plurality of first candidate content data by determining at least one of a keyword matching result corresponding to each of the plurality of first candidate content data and a semantic similarity result corresponding to each of the plurality of first candidate content data

S410

integrating at least one of the keyword matching result corresponding to each of the plurality of first candidate content data and the semantic similarity result corresponding to each of the plurality of first candidate content data as the comparison result between the first query data and each of the plurality of first candidate content data

S420

FIG. 4

```
┌─────────────────────────────────────────────────────────────┐
│ classifying the plurality of first querying results into a   │ ─── S510
│ plurality of content groups based on a source public         │
│ document of each of the plurality of first querying results  │
└─────────────────────────────────────────────────────────────┘
                              │
                              ▼
┌─────────────────────────────────────────────────────────────┐
│ determining group information of each of the plurality of    │ ─── S520
│ content groups based on the first score and the first rank   │
│ of the plurality of first querying results in each of the    │
│ plurality of content groups                                  │
└─────────────────────────────────────────────────────────────┘
                              │
                              ▼
┌─────────────────────────────────────────────────────────────┐
│ applying a reranker model to determining a second score      │ ─── S530
│ and a second rank of each of the plurality of content        │
│ groups based on a content data associated with the private   │
│ data                                                          │
└─────────────────────────────────────────────────────────────┘
                              │
                              ▼
┌─────────────────────────────────────────────────────────────┐
│ determining an overall score of each of the plurality of     │ ─── S540
│ content groups based on the group information, the second     │
│ score and the second rank of each of the plurality of        │
│ content groups                                                │
└─────────────────────────────────────────────────────────────┘
                              │
                              ▼
┌─────────────────────────────────────────────────────────────┐
│ determining the plurality of second querying results based   │ ─── S550
│ on the overall score of each of the plurality of content     │
│ groups                                                        │
└─────────────────────────────────────────────────────────────┘
```

FIG. 5

FIG. 6A

EP 4 773 018 A1

FIG. 6B

← → ↻ ⌂ ⚠ Not secure | 10.116.97.7:3838/HAPY/search/ 🔍 ☆ ▢ ▢ ⟳ | ○ Finish update ⋮

Prior Art Search ≡ ⚙ Settings ↺ ⚙

🔑 Generate keywords  🔍 Patent  Ⓖ Google  🎓 PQAI  📖 Paper

keywords | Patent | Paper | Google | PQAI

**Augmented reality display device with deep learning sensors [Magic Leap Inc] 2017-08-22** ☐2 🔧 + ✕

(facial recognition 7) (augmented reality 2) (outward-facing camera 2)

[Title] **augmented reality** Head Mounted **display** System with Deep Learning-Based Sensor Fusion for Enhanced **face recognition** and Lighting **detection** [Abstract] An advanced head mounted **display** system is disclosed. which integrates a variety of sensors and a deep neural network to enhance the experience of **augmented reality** (AR) by performing multiple functionalities such as **face recognition** and lighting **detection**. The system comprises an **outward-facing** camera, inertial measurement units, depth sensing **camera** s, microphones, and eye imaging **camera** s, all strategically positioned on the frame of the head mounted **display**, system to capture diverse sensor data. The non-transitory memory stores executable instructions that program a hardware processor to utilize the sensor data with a deep neural network. This network is designed with an input layer, lower layers, middle layers, and head components, each serving distinct roles in processing the sensor data. The lower layers are trained to extract basic features, while the middle layers build upon these to identify more complex features. The head components, utilising a unique pathway from the middle layers, are responsible for the tinal outputs related to **face recognition** and lighting **detection** , enhancing the visual experience to match the actual world's lighting conditions. The **display** system then presents information based on these computations, providing a more immersive and realistic AR experience. The invention optimizing the distribution of weights and computations across the neural network layers ensures efficiency in processing and outputting the desired AR enhancements.

Augmented Reality | Outward-Facing Camera

[Title] **augmented reality** Head Mounted **display** System with **Deep** Learning-Based Sensor Fusion **for** Enhanced **face recognition** and Lighting **detection** [Abstract] An advanced head mounted **display** system is disclosed, which integrates a variety of sensors and a deep neural network to enhance the experience of **augmented reality** (AR) by performing multiple functionalities such as **face recognition** and lighting **detection**. The system comprises an **outward-facing camera**, inertial measurement units, depth sensing **camera** s, microphones, and eye imaging **camera** s, all strategically positioned on the frame of the head mounted **display** system to capture diverse sensor data. The non-transitory memory stores executable instructions that program a hardware processor to utilize the sensor data with a deep neural network. This network is designed with an input layer, lower layers, middle layers, and head components, each serving distinct roles in processing the sensor data. The lower layers are trained to extract basic features, while the middle layers build upon these to identify more complex features. The head components, utilizing a unique pathway from the middle layers, are responsible for the final outputs related to **face recognition** and lighting **detection**, enhancing the visual experience to match the actual world's lighting conditions. The **display** system then presents information based on these computations, providing a more immersive and realistic AR experience. The invention optimizing the distribution of weights and computations across the neural network layers ensures efficiency in processing and outputting the desired AR enhancements.

621
621a

**Wearable device for facilitating enhanced interaction [Apple Inc] 2023-09-25** ☐3 🔧 + ✕

(outward-facing camera 6)

[Tale] Wearable Electronic Device with Dual-Facing **display** s for Enhanced **interaction** Between Wearer and Observers [Abstract] A wearable electronic device is designed to facilitate enhanced **interaction** between a wearer of a head-mounted **display** and outside observers. The device includes a housing that accommodates a wearer-facing **camera** for capturing images of the wearer

622
622a

620

FIG. 6C

Europäisches
Patentamt

European
Patent Office

Office européen
des brevets

# EUROPEAN SEARCH REPORT

Application Number

EP 25 22 1193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/182809 A1 (CYBORG INC [US]; DUPONT NICOLAS THOMAS MATHIEU [US] ET AL.) 6 September 2024 (2024-09-06) * paragraphs [0011], [0034] * * paragraphs [0060] - [0068] * * paragraph [0116] * ----- | 1-15 | INV. G06F16/3331 G06F21/62 |
| X | US 2024/119170 A1 (XU FENG [US] ET AL) 11 April 2024 (2024-04-11) * paragraphs [0005] - [0007] * * paragraphs [0033], [0047] - [0050] * * figure 4A * ----- | 1-15 | |

TECHNICAL FIELDS
SEARCHED (IPC)

G06F

The present search report has been drawn up for all claims

| Place of search | Date of completion of the search | Examiner |
|---|---|---|
| Munich | 22 May 2026 | Michalski, Stéphane |

EPO FORM 1503 03.82 (P04C01)

## ANNEX TO THE EUROPEAN SEARCH REPORT
## ON EUROPEAN PATENT APPLICATION NO.

EP 25 22 1193

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2026

| Patent document cited in search report | Publication date | Patent family member(s) | Publication date |
|---|---|---|---|
| WO 2024182809 A1 | 06-09-2024 | EP 4673869 A1 | 07-01-2026 |
| | | US 12164664 B1 | 10-12-2024 |
| | | US 2025028853 A1 | 23-01-2025 |
| | | WO 2024182809 A1 | 06-09-2024 |
| US 2024119170 A1 | 11-04-2024 | EP 4599351 A1 | 13-08-2025 |
| | | US 2024119170 A1 | 11-04-2024 |
| | | WO 2024076678 A1 | 11-04-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63741452